# EUROPÄISCHE PATENTSCHRIFT

(11) **EP 3 517 816 B1**
(45) Veröffentlichungstag und Bekanntmachung des Hinweises auf die Patenterteilung: **07.07.2021**
(21) Anmeldenummer: 19000006.7
(22) Anmeldetag: 08.01.2019
(51) Int. Cl.: F16L 5/10, H02G 3/22

(54) **STECKVERBINDER MIT STECKVERBINDERGEHÄUSE**
CONNECTOR WITH CONNECTOR HOUSING
CONNECTEUR AVEC BOÎTIER

(30) Priorität: 26.01.2018 DE 102018101790
(43) Veröffentlichungstag der Anmeldung: 31.07.2019
(73) Patentinhaber: HARTING Electric GmbH & Co. KG, 32339 Espelkamp (DE)
(72) Erfinder: Schönfeld, Alexander, 49086 Osnabrück (DE); Schnieder, Stefan, 49163 Bohmte (DE)

(56) Entgegenhaltungen:
- WO-A1-2007/132059
- WO-A2-2015/149757
- DE-A1- 10 119 736
- DE-C1- 3 832 228
- US-B1- 7 049 515
- US-B2- 8 609 990

## Beschreibung

Die Erfindung geht aus von einem Steckverbinder gemäß dem Oberbegriff des Hauptanspruchs 1.

Weiterhin geht die Erfindung aus von einem Verfahren zur Einführung eines oder mehrerer Kabel in ein Gehäuse gemäß der Gattung des unabhängigen Verfahrensanspruchs 21.

Derartige Dichteinsätze und Verfahren werden benötigt, um Kabel in Steckverbindergehäuse einzuführen, abzudichten und daran zu befestigen.

### Stand der Technik

Im Stand der Technik sind Dichteinsätze bekannt.

Die Druckschrift EP 2 746 634 A1 geht aus von einem Kabelhalter mit einem U-förmigen Rahmen und einer Anzahl von Dichteinsätzen ("Tüllen") zum Hindurchführen von Kabeln. Dieser Kabelhalter besitzt einen U-förmigen Rahmen mit zwei Schenkeln und einen diese beiden Schenkel miteinander verbindenden Steg. Weiterhin besitzt der Kabelhalter eine Anzahl von Dichteinsätzen. Jeder dieser Dichteinsätze weist wenigstens eine Bohrung zum Hindurchführen eines Kabels auf. Der Kabelhalter besitzt weiterhin einen Riegel, der im montierten Zustand die beiden Schenkel miteinander verbindet und auf die kabelbestückten Dichteinsätze einen Druck ausübt. Ausgehend von diesem Stand der Technik schlägt die Druckschrift vor, den Riegel und/oder den Rahmen aus elastischem Material zu bilden, wobei die beiden Enden des Riegels und die freien Enden der Schenkel Rücksprünge oder Vorsprünge aufweisen, welche miteinander eine Schnappverbindung bilden.

Die in der besagten Druckschrift gezeigten Dichteinsätze bestehen aus einem elastischen Material und besitzen eine quaderförmige oder würfelförmige Grundform mit einer hindurch verlaufenden zylinderförmigen Durchgangsöffnung. Im Querschnitt besitzen sie daher einen quadratischen Umfang sowie eine kreisrunde Durchgangsöffnung. Die Dichteinsätze haben jeweils einen axial, d.h. in Richtung der dazugehörigen Durchgangsöffnung verlaufenden Schlitz, sodass sie zum Zwecke des seitlichen Einlegens (oder zur seitlichen Entnahme) eines Kabels aufspreizbar sind.

Die Druckschrift WO 2015/149757 A2 offenbart einen modularen Steckverbinder bestehend aus einem Steckverbindergehäuse, einem darin aufgenommenen Halterahmen sowie zumindest einem Steckverbindermodul. Der Halterahmen ist über Befestigungsmittel mit dem Steckverbindergehäuse verbunden. Das zumindest eine Steckverbindermodul ist mittels Haltemittel in einem Modulsteckplatz im Halterahmen aufgenommen. Die Steckverbindermodule sind mit Sensoren ausgestattet, welche mit einer Auswertungs-Elektronik im modularen Steckverbinder verbunden sind. Die Auswertungs-Elektronik ist dafür vorgesehen Messwerte der Sensoren in den Steckverbindermodulen zu verarbeiten und wiederzugegeben, sowie die aufgenommenen Steckverbindermodule zu erkennen und die Konfiguration des modularen Steckverbinders zu verwalten.

Die Druckschrift DE 38 32 228 C1 beschreibt eine Leitungsdurchführung für abgedichtete, durch eine Gehäusewand hindurchzuführende Leitungen.

Die Druckschrift DE 101 19 736 A1 betrifft eine Kabelstütze zum Aufnehmen, Stützen und Halten wenigstens eines abgeschirmten Kabels in einer Kabelöffnung eines abgeschirmten Schaltschranks. Die Kabelöffnung besteht aus einem mit der Kabelöffnung und dem Kabel korrespondierenden elastischen Füllkörper. Der elastische Füllkörper weist eine gute elektrische Leitfähigkeit auf, wodurch eine leitfähige Verbindung zwischen Schaltschrank und Kabelschirm hergestellt wird.

Die Druckschrift US 8,609,990 B2 zeigt eine Dichtung für elektrische Kabel. Diese besitzt einen Hauptkörper aus elastischem Material sowie ein Durchgangsloch, das längs durch den Hauptkörper verläuft und den Sitz eines zu isolierenden Kabels bildet. Weiterhin durchläuft ein Längsschlitz den Körper der Dichtung und verbindet den Durchgangssitz mit der Außenseite, so dass aufgrund der elastischen Verformbarkeit des Materials der Dichtung das Einsetzen des Kabels in den Durchgangssitz ermöglicht ist.

Die Druckschrift WO 2007/132059 A1 offenbart ein Gehäuse, in das ein Kabel geführt und mit einem Dichteinsatz abgedichtet ist.

Nachteilig bei diesem Stand der Technik ist, dass die Montage mit einem erheblichen händischen Aufwand verbunden ist. Schließlich muss bei der händischen Montage mit einer Hand das Kabel geführt und mit der anderen Hand der Dichteinsatz gehalten werden, so dass sich zur Aufspreizung des Dichteinsatzes die Verwendung eines entsprechenden Spreizwerkzeugs anbietet, was aber einen erheblichen zusätzlichen Aufwand bedeutet. Auch ist bei der Herstellung eines solchen Dichtelements der zusätzliche Verfahrensschritt des Schlitzens notwendig, was den Herstellungsaufwand erhöht. Weiterhin werden insbesondere beim Einsatz derartiger Dichtmittel in Industriesteckverbindern zunehmend hohe Anforderungen an deren Dichtheit und gleichzeitig auch an die Haltekraft gestellt, so dass im Stand der Technik diesbezüglich ein ständiger Verbesserungsbedarf besteht.

### Aufgabenstellung

Die Aufgabe der Erfindung besteht darin, den vorgenannten Anforderungen Rechnung zu tragen und einen Steckverbinder anzugeben, dessen Dichtelement händisch mit nur geringem Aufwand montierbar ist. Dabei soll die vereinfachte Handhabung durch Verwendung der vorgeöffneten Dichteinsätze bei der Anpassung an die Erfordernisse eines Steckverbindermodularsystems erleichtert werden.

Diese Aufgabe wird durch die unabhängigen Ansprüche gelöst.

Ein Dichteinsatz zur Einführung mindestens eines Kabels in ein Steckverbindergehäuse ist aus mindestens einem elastisch verformbaren Material gebildet und weist mindestens eine Durchgangsöffnung zum Hindurchführen mindestens eines Kabels auf.

Der Dichteinsatz besitzt längs der Durchgangsöffnung zumindest einen Schlitz, durch den zwei einander gegenüberliegende Schlitzflächen gebildet sind. Dadurch kann der Dichteinsatz zur seitlichen Einführung oder Entnahme des Kabels einen geöffneten Zustand einnehmen. Weiterhin kann der Dichteinsatz zur Abdichtung und Zugentlastung des Kabels auch einen geschlossenen Zustand einnehmen.

Der Dichteinsatz befindet sich ohne Einwirkung äußerer Kräfte in seinem geöffneten Zustand, in welchem er an seinem Schlitz einen Spalt aufweist, durch den die beiden Schlitzflächen automatisch voneinander getrennt sind. Aus diesem Grund wird dieser automatisch geöffnete Zustand im Folgenden auch als "vorgeöffneter" Zustand bezeichnet.

Vorteilhafte Ausgestaltungen der Erfindung sind in den Unteransprüchen angegeben.

Im geschlossenen Zustand kann das Material des Dichteinsatzes die Durchgangsöffnung und damit auch das gegebenenfalls darin aufgenommene Kabel umschließen.

Ein solch geschlossener Zustand kann durch das Wirken äußerer Kräfte auf den Dichteinsatz herbeigeführt werden, z. B. indem der Dichteinsatz in einen Rahmen eingesetzt wird.

Im geschlossenen Zustand sind die beiden Schlitzflächen vorteilhafterweise form- und kraftschlüssig aneinandergefügt, so dass kein Spalt zwischen den Schlitzflächen existiert. Vorteilhafterweise umschließt der Dichteinsatz in seinem geschlossenen Zustand das durch die Durchgangsöffnung geführte Kabel zu dessen Abdichtung und Zugentlastung form- und kraftschlüssig.

Ein Vorteil der Erfindung besteht darin, dass der händische Montageaufwand verringert wird. Die Notwendigkeit eines Spreizwerkzeugs entfällt, da der Dichteinsatz im Ausgangszustand, also ohne das Einwirken äußerer Kräfte, bereits geöffnet ("vorgeöffnet") ist, wodurch das Kabel durch die Öffnung in den Dichteinsatz besonders leicht einführbar ist. Somit kann das Kabel beispielsweise mit einer einzigen Hand sofort in den bereits automatisch vorgeöffneten Dichteinsatz eingeführt werden, wobei die andere Hand z. B. zum Halten eines Steckverbindergehäuses zu Verfügung steht. Aus diesem Grund ist der Dichteinsatz insbesondere bei seiner Verwendung in Steckverbindergehäusen von besonderem Vorteil.

In einer vorteilhaften Ausgestaltung kann die Durchgangsöffnung zur Aufnahme von Kabeln mit kreisrundem Querschnitt im geschlossenen Zustand des Dichteinsatzes eine kreisrunde Form aufweisen. Im geöffneten Zustand kann eine solche Durchgangsöffnung an ihrer dem Spalt gegenüberliegenden Seite jedoch einen eher länglichen Verlauf, nämlich einen Kompressionsabschnitt, besitzen. Da das Material des Dichteinsatzes beim Schließen in diesem Kompressionsabschnitt eine besonders starke Kompression erfährt, kann die Durchgangsöffnung im geschlossenen Zustand wieder eine kreisrunde Form einnehmen.

In einer bevorzugten Ausgestaltung kann der Dichteinsatz in seiner Durchgangsöffnung weiterhin eine Innenkontur aufweisen, durch deren Form und/oder Härte ein gewünschtes Verhältnis und damit ein gewünschter Kompromiss zwischen der besagten Abdichtung und der Haltekraft der besagten Zugentlastung einstellbar ist.

Der bevorzugt einstückig ausgeführte Dichteinsatz kann je nach Anwendung beispielsweise aus einem weichen Kunststoff ("Elastomer") und/oder um eine Kautschukverbindung ("Gummi") gebildet sein.

Ohne die Einwirkung äußerer Kräfte kann der Spalt des dadurch vorgeöffneten Dichteinsatzes eine Breite aufweisen, die mindestens 5%, insbesondere mindestens 10%, bevorzugt mindestens 15% und besonders bevorzugt mindestens 20% des Durchmessers beträgt, den die Durchgangsöffnung im geschlossenen Zustand des Dichteinsatzes besitzt.

Vorteilhafterweise vereinfacht sich die Herstellung, insbesondere die automatisierte Herstellung, derartiger Dichteinsätze, da der sonst notwendige Verfahrensschritt des Schlitzens entfällt. Stattdessen kann die gewünschte vorgeöffnete Form beispielsweise in Spritzgusstechnik durch die Verwendung einer entsprechenden Spritzgussform erzeugt werden.

In der Spritzgusstechnik ist es besonders leicht möglich, an dem Dichteinsatz Schlitzflächen auszubilden, deren Verlauf von dem einer Ebene abweicht. Auf diese Weise ist es insbesondere möglich, die beiden einander gegenüberliegenden Schlitzflächen als zueinander passende, komplementäre Konturen auszubilden, so dass die beiden Kontaktflächen von einem ebenen Verlauf abweichen und weiterhin formschlüssig und insbesondere ineinandergreifend zusammenfügbar sind. Dies dient dazu, die Haltekraft und Dichtigkeit des geschlossenen Dichteinsatzes zu unterstützen und dabei auch ein axiales Verschieben der beiden Kontaktflächen gegeneinander in Kabelrichtung zu verhindern. Insbesondere bietet sich für diese Form eine üblicherweise als sogenannter "Wellenschnitt" bezeichnete Kontur an, d. h. die Schlitzflächen besitzen beide eine Wellenform, die in diesem Fall in Längsrichtung des Kabels verläuft und mit der sie formschlüssig zusammenfügbar sind. Es sind aber auch andere, z. B. rechteckige, stupfwinklige oder spitz zulaufende und/oder auch dreidimensionale, z. B. kugelsegmentartige oder pyramidenförmige Konturen möglich. Insbesondere können die letztgenannten dreidimensionalen Konturen besonders vorteilhaft sein, da sie beim geschlossenen Dichteinsatz sowohl einem möglicherweise auftretenden radialen als auch einem axialen Versatz der Schlitzflächen zueinander in der Schlitzebene entgegenwirken. Dabei beziehen sich die Richtungsangaben "radial" und "axial" auf die Form, insbesondere die Symmetrie, der Durchgangsöffnung.

Um den Herstellungsaufwand der Dichteinsätze möglichst gering zu halten, bietet es sich aber an die Kontur der Schlitzflächen nur in axialer Richtung, also in Längsrichtung des Kabels, auszuführen, da ihre gegenseitige Positionierung in radialer Richtung in der Regel bereits durch das eingelegte Kabel und die Innenfläche der Durchgangsöffnung ausreichend genau aneinander festgelegt ist, um einen radialen Versatz zu vermeiden.

In einer weiteren bevorzugten Ausgestaltung kann die Querschnittfläche der Durchgangsöffnung auch um einen geringen Toleranzbereich kleiner sein als die Querschnittsfläche des hindurchgeführten Kabels, weil dies für eine besonders starke Abdichtung und/oder besonders starke Haltekräfte sorgt. Dieser Toleranzbereich hängt unter anderem von der Elastizität des Materials des Dichteinsatzes ab. Der Toleranzbereich kann beispielsweise größer sein als 0,1 mm und kleiner sein als 2 mm. Insbesondere kann der Toleranzbereich größer sein als 0,2 mm und kleiner sein als 1,5 mm. Bevorzugt kann der Tollerenzbereich größer sein als 0,3 mm und kleiner sein als 1 mm. Besonders bevorzugt kann der Toleranzbereich beispielsweise größer sein als 0,4 mm und kleiner sein als 0,8 mm also beispielsweise 0,5 mm betragen.

Der Dichteinsatz kann in seiner Durchgangsöffnung dem Spalt gegenüberliegend den oben bereits erwähnten Kompressionsabschnitt aufweisen, in dessen Bereich er beim Schließen stärker als die anderen Bereiche der Durchgangsöffnung komprimiert wird, so dass der Dichteinsatz ein eingeführtes Kabel nach dem Schließen mit der entsprechenden Durchgangsöffnung form- und kraftschlüssig umschließt.

In einer vorteilhaften Ausgestaltung kann ein Dichteinsatz mehrere Durchgangsöffnungen aufweisen, deren Schlitze (also im vorgeöffneten Zustand ihre Spalte) in eine einzige Richtung weisen. Insbesondere kann ein Dichteinsatz vier Durchgangsöffnungen, nämlich zwei vordere und zwei hintere Durchgangsöffnungen, aufweisen, von denen die beiden hinteren Durchgangsöffnungen durch ihren jeweiligen Schlitz (im vorgeöffneten Zustand durch ihren Spalt) mit je einer der beiden vorderen Durchgangsöffnungen verbunden sind. Die beiden vorderen Durchgangsöffnungen können dann durch ihren Schlitz (im vorgeöffneten Zustand durch ihren Spalt) mit dem Außenbereich verbunden sein. Ein solcher Dichteinsatz kann beispielsweise vier Kabel mit entsprechend geringem Querschnitt aufnehmen. Dabei kann er dieselben Außenabmessungen aufweisen, wie ein anderer Dichteinsatz, der nur eine einzige Durchgangsöffnung besitzt und nur ein einziges, aber dafür möglicherweise entsprechend größeres Kabel, also ein Kabel mit größerem Querschnitt, aufnimmt. Letzter kann selbstverständlich eine größere Durchgangsöffnung besitzen und ein Kabel größeren Querschnitts, beispielsweise ein Starkstromkabel, aufnehmen, während der erstgenannte Dichteinsatz beispielsweise vier Signalleitungen aufnehmen kann, die jeweils einen geringeren Querschnitt besitzen als das Starkstromkabel. Auf diese Weise können durch eine geeignete Zusammenstellung geeigneter Dichteinsätze flexibel änderbare und für spezielle Anwendungen je nach Bedarf ausgestaltete Kabeldurchführungseinrichtungen zur Verfügung gestellt werden.

Selbstverständlich sind die dabei zu verwendenden Dichteinsätze nicht auf die beiden explizit genannten Ausführungen beschränkt. Dem Fachmann sind einer Vielzahl verschiedener Kabel bekannt, an deren Querschnittsfläche entsprechende Dichteinsätze in gleicher Weise anpassbar sind. Den hier geschilderten Ausgestaltungen kommt dabei lediglich beispielhafter Charakter zu.

Eine besonders vorteilhafte Kabeldurchführungseinrichtung kann mindestens einen, bevorzugt aber mehrere, gleiche und/oder verschiedene Dichteinsätze sowie einen entsprechenden Rahmen zu deren Aufnahme aufweisen.

Von besonderem Vorteil sind derartige Dichteinsätze in Verbindung mit einem solchen Rahmen, insbesondere einem im Wesentlichen U-förmigen Rahmen, weil sie beim Einfügen in den Rahmen durch diesen komprimiert werden und dadurch das Kabel bereits fixieren. Eine endgültige Fixierung können sie daraufhin durch eine weitere oder sogar endgültige Montage des Rahmens erfahren.

Ein solcher Rahmen kann bevorzugt zwei insbesondere parallel zueinander angeordnete Schenkel und einen diese beiden Schenkel an ihren ersten Enden verbindenden ersten Steg aufweisen, der insbesondere rechtwinklig zu den beiden Schenkeln ausgerichtet ist.

Weiterhin kann der Rahmen ein oder mehrere Trennwände aufweisen, durch die im Rahmen einzelne Segmente gebildet sind, wobei in jedes dieser Segmente ein Dichteinsatz einfügbar ist. Insbesondere können die Trennwände parallel zueinander und zu den Schenkeln des Rahmens verlaufen, so dass die Segmente rechteckig und/oder sogar quadratisch ausgeführt sein können. Insbesondere können die Trennwände in äquidistanten Intervallen angeordnet sein, so dass vorteilhafterweise im Rahmen mehrere gleich große Segmente gebildet sind.

Beim Einfügen der vorgeöffneten Dichteinsätze können diese durch die Trennwände und/oder die Schenkel komprimiert werden, insbesondere, wenn deren Schlitz, im geöffneten/ vorgeöffneten Zustand deren Spalt jeweils in diejenige Richtung weist, aus welcher die Dichteinsätze in den Rahmen eingeführt werden. Vorteilhafterweise sind dabei bereits Kabel in die Dichteinsätze eingefügt, so dass diese bereits mit einer gewissen Kraft im jeweiligen Dichteinsatz gehalten sind.

Sind die Dichteinsätze zumindest weitgehend in den Rahmen eingefügt, so kann die endgültige Position der Kabel korrigiert werden, d. h. sie können von jeder beliebigen Seite noch etwas tiefer in Richtung des Dichteinsatzes geschoben oder aus ihm herausgezogen werden. Befinden sich die Kabel in ihrer endgültigen Position, so kann der Rahmen mit einem zweiten Steg abgeschlossen werden, wobei die Dichteinsätze gegebenenfalls noch um ein letztes Stück in den Rahmen hineingeschoben und zur endgültigen Abdichtung und Zugentlastung durch den zweiten Steg komprimiert werden. Dies kann geschehen, indem der zweite Steg z. B. mit Schrauben oder ähnlichen Befestigungselementen, wie z. B. mit Befestigungspins, auf den Rahmen geschraubt oder, z. B. mit einer Rastvorrichtung, auf den Rahmen gerastet wird. Auch kann der zweite Steg einseitig mit einem Scharnier an einem der Schenkel angebracht sein und im hebelartig geschlossenen Zustand an dem anderen Schenkel verrasten. Dabei kann der zweite Steg insbesondere parallel zum ersten Steg am Rahmen angebracht sein. Durch das Anbringen des zweiten Stegs sind die Kabel endgültig in ihren Dichteinsätzen fixiert und abgedichtet.

Ein entsprechendes Verfahren zur Einführung eines oder mehrerer Kabel durch eine Kabeldurchführungseinrichtung in ein Steckverbindergehäuse eines Steckverbinders, umfasst somit folgende Schritte:
A. Einführen eines oder mehrerer Kabel in einen oder mehrere automatisch vorgeöffnete Dichtensätze;
B. Einfügen des/der Dichteinsätze in ein oder mehrere Segmente eines Rahmens; dadurch
C. automatisches Schließen der Dichteinsätze und Halten des/der Kabel(s) im jeweiligen Dichteinsatz;
D. korrigieren der Position des oder der Kabel im jeweiligen Dichteinsatz;
E. endgültiges Komprimieren der Dichteinsätze zur Zugentlastung und zur endgültigen Fixierung der Kabel in der gewünschten Position durch Anbringen eines zweiten Stegs.

Vorteilhafterweise kann das Verfahren zusätzlich noch den folgenden Schritt beinhaltet:
Befestigen des Rahmens an den Kabelanschlussbereich des Steckverbindergehäuses. Insbesondere kann in dem Steckverbindergehäuse ein im Folgenden ausführlich beschriebenes Steckverbindermodularsystem angeordnet sein.

Das vorgenannte Befestigen des Rahmens an dem Gehäuse kann vorteilhafterweise vor dem Verfahrensschritt D. stattfinden. Dies ist von Vorteil, weil sich der Rahmen durch seine Anbringung in seiner endgültigen Relativposition zum Gehäuse befindet und die jeweilige im Gehäuse existierende Kabellänge vor der endgültigen Fixierung des Kabels dadurch besonders intuitiv einstellbar ist.

Ein solcher Rahmen kann, insbesondere mit bereits eingeführten Dichteinsätzen und darin aufgenommenen Kabeln, auf ein Gehäuse auf- und/oder daran anschraubbar sein. Der Rahmen kann somit an einer Kabelanschlussseite des Gehäuses befestigt werden. Dadurch kann eine zugentlastete und abgedichtete, z. B. wasserdichte, Einführung der Kabel in das Gehäuse mit einfachen Mitteln und geringem Bedienaufwand kostengünstig gewährleistet werden. Insbesondere kann auf die vorgenannte Weise die Kabellänge innerhalb des Gehäuses komfortabel vor der endgültigen Fixierung des Kabels voreingestellt werden. Daraufhin kann das Kabel durch Anbringen des Stegs am Rahmen in seiner endgültigen Position fixiert werden.

Erfindungsgemäß wird die vorgenannte Kabeldurchführungseinrichtung mit einem Steckverbindermodularsystem kombinieret. Dabei kann die vereinfachte Handhabung durch Verwendung der vorgeöffneten Dichteinsätze bei der Anpassung an die Erfordernisse des Modularsystems erheblich erleichtert werden. Dadurch wird der händische Gesamtaufwand der Montage eines solchen Steckverbindermodularsystems inklusive der Montage der zugentlastenden und abdichtenden Kabeleinführung erheblich erleichtert und bleibt so für potentielle Kunden im vertretbaren Rahmen. Dies bildet schließlich ein wesentliches Verkaufsargument.

Zum besseren Verständnis sollen daher im Folgenden einige Steckverbindermodularsysteme detailliert erläutert und in den Offenbarungsgehalt dieser Anmeldung aufgenommen werden.

Steckverbindermodularsysteme werden eingesetzt, um einen Steckverbinder, insbesondere einen schweren Rechtecksteckverbinder, flexibel an bestimmte Anforderungen bezüglich der Signal- und Energieübertragung z. B. zwischen zwei elektrischen Geräten, anpassen zu können. Üblicherweise werden dazu Steckverbindermodule in entsprechende Steckverbindermodularrahmen, die mitunter auch als Halterahmen, Gelenkrahmen, Modulrahmen oder Modularrahmen bezeichnet werden, eingesetzt. Die Steckverbindermodularrahmen dienen somit dazu, mehrere zueinander gleichartige und/oder auch unterschiedliche Steckverbindermodule aufzunehmen und diese sicher an einer Fläche und/oder in einem Steckverbindergehäuse o. ä. zu befestigen.

Die Steckverbindermodule besitzen in der Regel jeweils einen im Wesentlichen quaderförmigen Isolierkörper. Diese Isolierköper können beispielsweise als Kontaktträger dienen und Kontakte verschiedenster Art aufnehmen und fixieren. Die Funktion eines dadurch gebildeten Steckverbinders ist also sehr flexibel. Es können z. B. pneumatische Module, optische Module, Module zur Übertragung elektrischer Energie und/oder elektrischer analoger und/oder digitaler Signale im jeweiligen Isolierkörper aufgenommen sein und so im Steckverbindermodularsystem Verwendung finden. Zunehmend übernehmen Steckverbindermodule auch mess- und datentechnische Aufgaben.

Innerhalb eines Steckverbindermodularrahmens, auch als Halterahmen, Modulrahmen, Gelenkrahmen oder Modulrahmen bekannt, in zahlreichen Druckschriften und Veröffentlichungen offenbart, auf Messen gezeigt und befinden sich häufig im industriellen Umfeld in Form von Schwerlaststeckverbindern im Einsatz. Beispielsweise werden sie in den Druckschriften DE 10 2013 106 279 A1, DE 10 2012 110 907 A1, DE 10 2012 107 270 A1, DE 20 2013 103 611 U1, EP 2 510 590 A1, EP 2 510 589 A1, DE 20 2011 050 643 U1, EP 0 860 906 A2, DE 296 01 998 U1, EP 1 353 412 A2, DE 10 2015 104 562 A1, EP 3 067 993 A1, EP 1 026 788 A1, EP 2 979 326 A1, EP 2 917 974 A1, EP 1 801 927 B1, DE 10 2013 113 976 B4, EP 1 801 927 B1, DE 20 2013 103 611 U1, DE 10 2015 114 703 A1 beschrieben.

Dabei ist beispielsweise aus der besagten Druckschrift EP 0 860 906 B1 ein Steckverbindermodularrahmen in Form eines Gelenkrahmens zur Halterung von Steckverbindermodulen und zum Einbau in Steckverbindergehäuse oder zum Anschrauben an Wandflächen bekannt. Dabei sind die Steckverbindermodule in den Steckverbindermodularrahmen eingesetzt. An den Steckverbindermodulen sind Halterungsmittel vorgesehen, die mit an gegenüberliegenden Seitenteilen des Steckverbindermodularrahmens vorgesehenen Fenstern zusammenwirken, wobei die Fenster in Ausnehmungen bestehen, die als allseitig geschlossene Öffnungen in den Seitenteilen des Steckverbindermodularrahmens ausgebildet sind.

Ein solcher Steckverbindermodularrahmen kann beispielsweise als Gelenkrahmen aus zwei gelenkig miteinander verbundenen Gelenkrahmenhälften ausgeführt sein, wobei die Trennung des Steckverbindermodularrahmen quer zu den Seitenteilen des Gelenkrahmens vorgesehen ist. In den Befestigungsenden des Steckverbindermodularrahmens sind Gelenke so angeordnet, dass sich die Seitenteile beim Aufschrauben des Steckverbindermodularrahmens auf eine Befestigungsfläche rechtwinklig zur Befestigungsfläche ausrichten, wodurch die Steckverbindermodule über die Halterungsmittel eine formschlüssige Verbindung mit dem Steckverbindermodularrahmen eingehen.

In einer Weiterentwicklung kann ein Gelenkrahmen z. B. gemäß der Druckschrift DE 10 2015 114 703 A1 zumindest ein Fixierungsmittel aufweisen, über welches die Gelenkrahmenhälften in zwei Positionen, einer offenen Position und einer geschlossenen Position, zueinander verrastbar sind, was die Bestückung erheblich vereinfacht.

Auch können, wie z. B. in der Druckschrift DE 20 2013 103 611 U1 beschrieben, zwei äußerst stabil miteinander verschraubbare, in Stanzbiegetechnik preiswert herstellbare und zusammenschraubbare Halterahmenhälften verwendet werden, die zur Aufnahme von u.a. pneumatischen Modulen geeignet sind.

Weiterhin können auch einteilige Steckverbindermodularrahmen zum Einsatz kommen, die aus einem Kunststoffmaterial bestehen, wie es beispielsweise in der Druckschrift EP 1 801 927 B1 offenbart ist. Dieser Steckverbindermodularrahmen ist als umlaufender Kragen ausgebildet und weist an seiner Steckseite mehrere getrennte Wandsegmente auf. Jeweils zwei gegenüberliegende Wandsegmente bilden einen Einfügebereich für ein Steckverbindermodul, wobei die Wandsegmente fensterartige Öffnungen aufweisen, die zur Aufnahme von an den Schmalseiten der Module angeformten Vorsprüngen dienen.

Weiterhin kann auch ein Steckverbindermodularrahen Verwendung finden, wie er beispielsweise in der Druckschrift DE 10 2013 113 976 B4 offenbart ist, und der einen Steckverbindermodularrahmen für einen schweren Steckverbinder zur Aufnahme gleichartiger und/oder unterschiedlicher Steckverbindermodule. Der Steckverbindermodularrahmen besteht aus einem im Querschnitt rechteckigen Grundrahmen, der zwei sich gegenüberliegenden Seitenteile aufweist. An den Seitenteilen ist jeweils ein Wangenteil, bestehend aus einem flexiblen Material, insbesondere federelastischem Blech, angebracht. Beim Einführen eines Steckverbindermoduls in den Steckverbindermodularrahmen senkrecht zur Rahmenebene werden diese Wangenteile zunächst vom Seitenteil weg nach außen gebogen. Insbesondere können die Wangenteile Laschen mit Rastfenstern, besitzen, welche dazu geeignet sind, die Steckverbindermodule an deren Rastnasen einzeln im Steckverbindermodularrahmen zu verrasten. Die Steckverbindermodule können somit einzeln und mit nur geringem Aufwand aus der Kabelanschlussrichtung und in Steckrichtung in den Steckverbindermodularrahmen eingeschoben und in umgekehrter Richtung wieder entnommen werden. Das eingesteckte Steckverbindermodul ist vom Grundrahmen des Steckverbindermodularrahmen in der Rahmenebene fest und stabil gehalten. In ihrer Einführrichtung, senkrecht zur Rahmenebene, können sie mit ihren Rastnasen jeweils zwischen zwei einander gegenüberliegenden Laschen verrasten. Die Bauform gestattet es, dass der Steckverbindermodularrahmen aus Metall besteht und ermöglicht somit die für Schwerlaststeckverbinder notwendige Schutzerdung. Gleichzeitig hat diese Bauform hat grundsätzlich den Vorteil, dass die Steckverbindermodule einzeln eingesteckt und entnommen werden können, ohne dass die Befestigung der anderen Module davon beeinträchtigt wird.

Bei dem Gehäuse, an welchem die Kabeldurchführungseinrichtung befestigt wird, handelt es sich somit um ein Steckverbindergehäuse, insbesondere um eine spezielles Tüllengehäuse, welches an seiner Kabelanschlussseite eine Öffnung zum Ein- und/oder Anfügen des Rahmens mit den Dichteinsätzen aufweist. Vorteilhafterweise handelt es sich dabei um ein Steckverbindergehäuse, das für die Aufnahme eines Steckverbindermodularsystems, z. B. eines der vorgenannten Steckverbindermodularsysteme, geeignet ist. Dies ist aufgrund der vereinfachten Handhabung und Flexibilisierung der Kabeleinführung jeweils vorteilhaft. Somit kann an einen Steckverbinder, der ein Steckverbindermodularsystem besitzt, am Kabelanschlussbereich seines Gehäuses, insbesondere seines Tüllengehäuses, eine solche Kabeldurchführungseinrichtung angebracht werden. Also kann der Steckverbinder mit dem jeweiligen Steckverbindermodularsystem eine solche Kabeldurchführungseinrichtung aufweisen, was von besonderem Vorteil ist.

Die Kabeldurchführungseinrichtung weist mehrere verschiedene Dichteinsätze, darunter beispielsweise auch mindestens einen Dichteinsatz mit mehreren Durchgangsöffnungen, auf. Dadurch können die im Steckverbinder enthaltenen einzelnen Steckverbindermodule über dazugehörige Kabel durch die Kabeldurchführungseinrichtung mit geeigneten Signalen und/oder Energie versorgt werden.

Durch die geeignete Auswahl der Dichteinsätze kann die Kabeldurchführungseinrichtung schließlich besonders vorteilhaft und dabei sehr individuell an die Erfordernisse des ebenfalls individuell zusammengestellten Steckverbindermodularsystems angepasst werden.

Wenn ein entsprechender Erweiterungs- und/oder Änderungsbedarf besteht, braucht die Kabeldurchführungseinrichtung lediglich um einen entsprechenden Dichteinsatz ergänzt zu werden, dessen Durchgangsöffnung im Wesentlichen der Querschnittsform und -größe des jeweiligen Kabels entspricht, welches mit dem erweiterndem Steckverbindermodul kabelanschlussseitig verbunden ist. Auch die entsprechende Kabellänge des zum jeweiligen Modul gehörigen Kabels kann durch den vorgeöffneten Dichteinsatz besonders vorteilhaft angepasst werden. Beispielsweise kann das Kabel bei noch nicht angebrachtem zweiten Steg zur Korrektur seiner Länge im Steckverbindergehäuse noch durch den Dichteinsatz bewegt werden. Ist jedoch der zweite Steg angebracht, so ist der jeweilige Dichteinsatz endgültig komprimiert und das jeweilige Kabel ist endgültig darin fixiert und abgedichtet.

Ein besonderer Vorteil besteht darin, dass nicht nur die händische, sondern auch eine maschinelle Montage eines Steckverbinders, der ein Modularsystem beinhaltet, durch die Verwendung der vorgeöffneten Dichteinsätze erheblich erleichtert wird. Schließlich werden Steckverbindermodularsysteme in zunehmendem Maße maschinell bestückt, so dass durch die vorgeöffneten Dichteinsätze nun zusätzlich auch die Automatisierung der Kabeleinführung in den Steckverbinder mit gleichzeitiger Abdichtung und Zugentlastung deutlich vereinfacht wird.

Zur dichten, z. B. wasserdichten, Befestigung kann der Rahmen an seiner dem Gehäuse zugewandten Seite eine Dichtungsrille mit einem darin eingelegten Dichtungsring aufweisen. Weiterhin kann der Rahmen an dieser Seite Schrauböffnungen mit je einem Innengewinde besitzen. Weiterhin kann das entsprechende Gehäuse, also das Steckverbindergehäuse, insbesondere des Tüllengehäuse aber auch das Schaltschrankgehäuse, das Gehäuse der Verteilerbox oder das Gerätegehäuse, etc., Schraubdurchführungsbohrungen ohne Innengewinde aufweisen.

Durch die Schraubdurchführungsbohrungen sind vorteilhafterweise Schrauben geführt, mittels derer der Rahmen mit seinen Schrauböffnungen an das Gehäuse anschraubbar ist. Somit kann auch eine wasserdichte Verbindung zwischen dem Rahmen und dem Gehäuse gewährleistet werden.

In einer weiteren Ausgestaltung kann auch der zweite Steg Bestandteil des Gehäuses sein. Beispielsweise kann es sich um das Gehäuse der elektrischen Verteilerbox oder eines Sicherungskastens handeln, der im Freien aufgestellt werden kann und dadurch Witterungseinflüssen ausgesetzt ist. Das Gehäuse kann einen Deckel, z. B. einen Klappdeckel oder einen Schiebedeckel besitzen, der den Steg beinhaltet oder zumindest einen Teil besitzt, der gegenüber der Kabeleinführungseinrichtung die Funktionalität des Stegs besitzt. Der Rahmen mit den darin eingeführten Dichteinsätzen kann sich dann in einer entsprechenden Ausnehmung des Gehäuses befinden, wobei die Dichteinsätze bereits geschlossen sind und die hindurchgeführten Kabel halten. Durch Schließen des Deckels können sie ihre endgültige Kompression erfahren und die Kabel so mit der gewünschten Haltekraft und Dichtigkeit an der Verteilerbox fixieren.

### Ausführungsbeispiel

Ein Ausführungsbeispiel der Erfindung ist in den Zeichnungen dargestellt und wird im Folgenden näher erläutert. Es zeigen:
- Fig. 1a: eine montierte Kabeldurchführungseinrichtung mit hindurchgeführten Kabeln;
- Fig. 1b: eine montierte Kabeldurchführungseinrichtung ohne hindurchgeführte Kabel;
- Fig. 1c: eine demontierte/unmontierte Kabeldurchführungseinrichtung;
- Fig. 2a: einen ersten vorgeöffneten Dichteinsatz mit einer ersten Durchgangsöffnung in einer Draufsicht, zusammen mit einem einzuführenden ersten Kabel;
- Fig. 2b: den vorgeöffneten ersten Dichteinsatz in einer Frontansicht;
- Fig. 3a: einen vorgeöffneten zweiten Dichteinsatz mit vier zweiten Durchgangsöffnungen in einer Draufsicht;
- Fig. 3b: den vorgeöffneten zweiten Dichteinsatz in einer Frontansicht.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

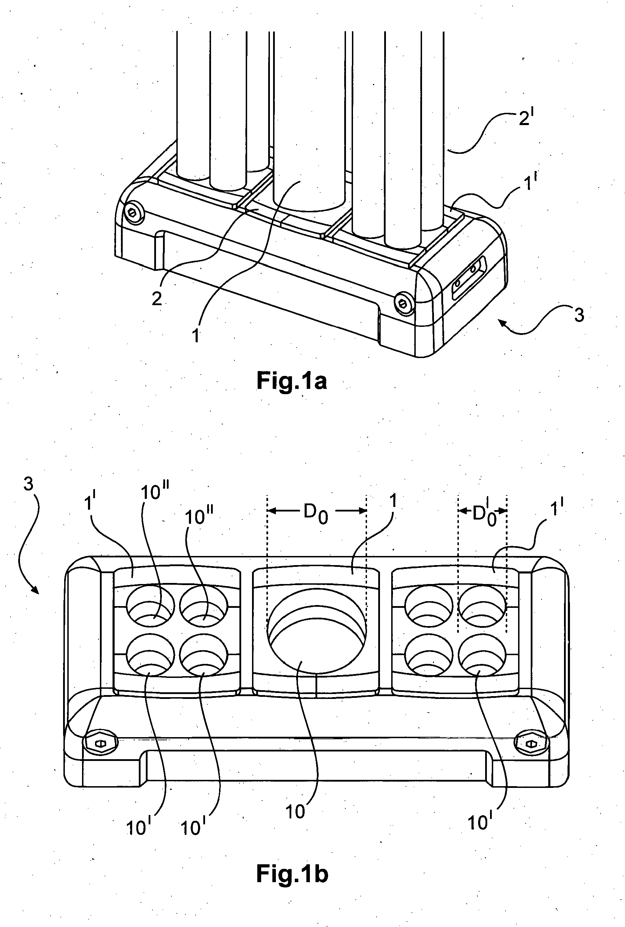

Die Fig. 1a zeigt eine montierte Kabeldurchführungseinrichtung, aufweisend einen Rahmen 3 und drei darin eingesetzte und fixierte Dichteinsätze 1,1', nämlich einen ersten Dichteinsatz 1 und zwei zweite Dichteinsätze 1', mit hindurchgeführten Kabeln 2, 2', nämlich einem ersten Kabel 2 und acht zweiten Kabeln 2'. Dabei sind die Kabel 2, 2'durch die Dichteinsätze 1, 1' endgültig zugentlastet und gegenüber der Kabeldurchführungseinrichtung abgedichtet.

Die Fig. 1b zeigt die montierte Kabeldurchführungseinrichtung ohne die besagten Kabel 2, 2'. Dadurch sind die drei in den Rahmen 3 eingesetzten Dichteinsätze 1,1' in ihrem geschlossenen Zustand gut zu sehen. Der erste in den Rahmen 3 eingesetzte Dichteinsatz 1 ist in der Mitte angeordnet. Er besitzt eine im geschlossenen Zustand kreisrunde erste Durchgangsöffnung 10, die einen ersten Durchmesser Do aufweist. Die beiden zweiten Dichteinsätze 1' besitzen jeweils vier zweite Durchgangsöffnungen 10', 10", nämlich zwei vordere 10'und zwei hintere 10" Durchgangsöffnungen, welche zueinander in einem quadratischen Muster angeordnet sind. Die zweiten Durchgangsöffnungen 10', 10" weisen je einen zweiten Durchmesser D₀' auf, der deutlich kleiner ist als der zum ersten Dichteinsatz 1 gehörende erste Durchmesser D₀.

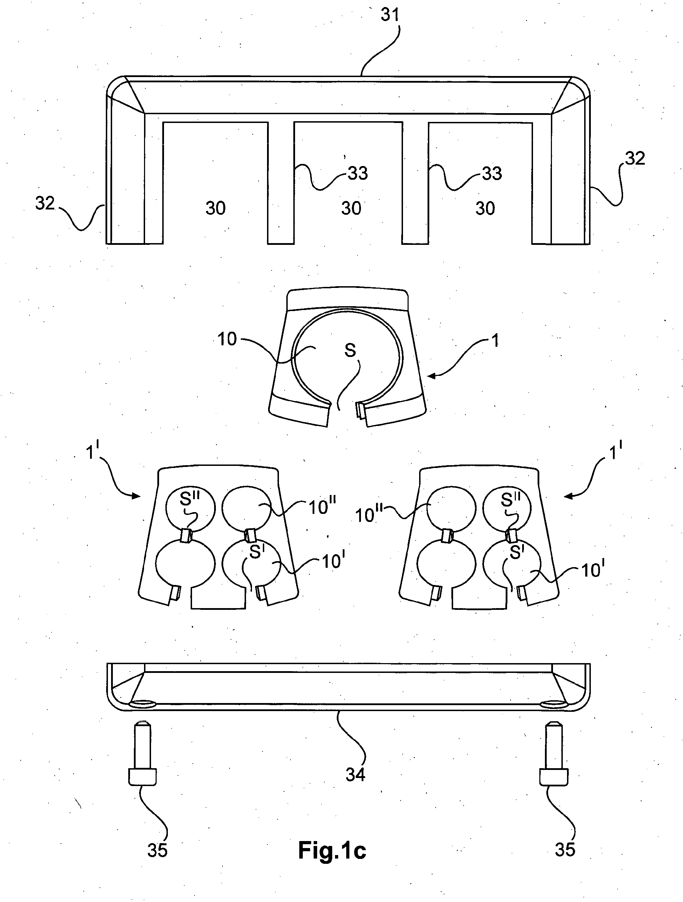

Die Fig. 1c zeigt die Kabeldurchführungseinrichtung in einem unmontierten/demontierten Zustand in Form einer Explosionsdarstellung. Die Kabeldurchführungseinrichtung umfasst den ersten Dichteinsatz 1, die beiden zweiten Dichteinsätze 1' und den Rahmen 3. Der Rahmen 3 besitzt einen ersten Steg 31, an dessen Enden rechtwinklig in eine gemeinsame Richtung von ihm fortstrebende Schenkel 32 angeformt sind. Zwischen diesen Schenkeln 32 sind zwei Trennwände 33 parallel dazu mit jeweils ihrem ersten Ende an den ersten Steg 31 in äquidistanten Intervallen angeformt. Die beiden Stege 32 und die beiden Trennwände 33 besitzen die gleiche Länge. Zwischen ihnen sind dadurch drei gleich große Segmente 30 gebildet, die zum Einfügen der Dichtensätze 1, 1' vorgesehen sind.

Weiterhin sind die Dichteinsätze 1,1' gezeigt, die sich außerhalb des Rahmens 3 befinden. Bereits in dieser Darstellung wird deutlich, dass sich diese Dichteinsätze 1, 1' ohne Einwirkung äußerer Kräfte in einem vorgeöffneten Zustand befinden. Dadurch besitzen sie an jeder ihrer Durchgangsöffnungen 10, 10', 10" jeweils mindestens einen Spalt S, S', S", durch den ohne großen händischen Aufwand ein entsprechendes Kabel 2, 2' seitlich in die jeweilige Durchgangsöffnung 10, 10', 10" des jeweiligen Dichtensatzes 1, 1' einführbar ist.

Weiterhin besitzt der Rahmen 3 einen zweiten Steg 34, mit dem die in den Rahmen eingeführten Dichteinsätze 1,1' zur endgültigen Fixierung der Kabel 2, 2' endgültig fixierbar und komprimierbar sind, indem der Rahmen 3 mit diesem zweiten Steg 34 abgeschlossen wird. Mittels zweier Schrauben 35 kann der zweite Steg 34 dazu an den beiden Schenkeln 32 verschraubt werden. Dann verläuft er 34 parallel zum ersten Steg 31.

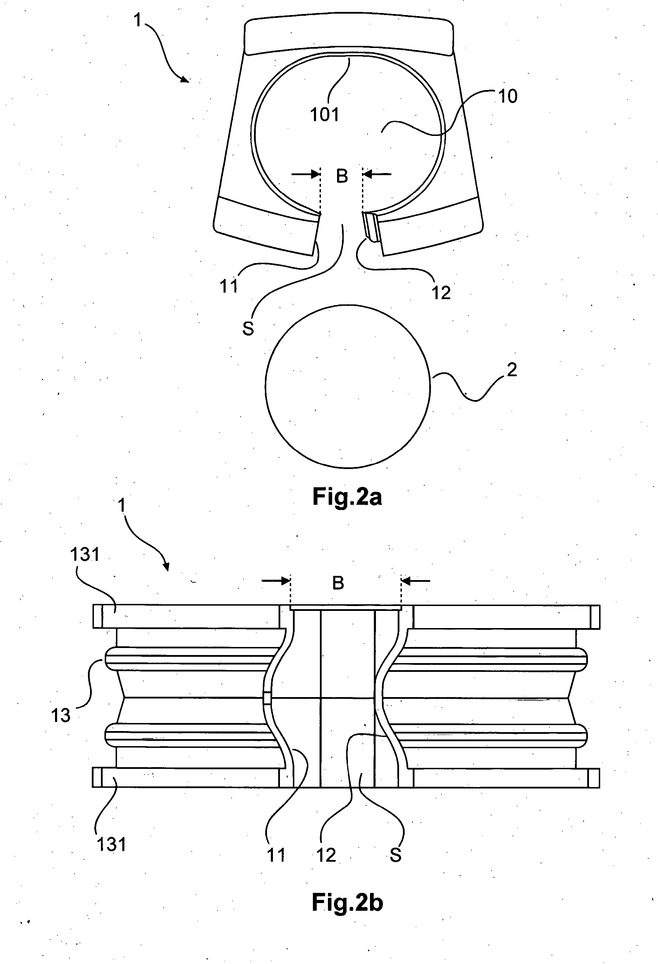

Die Fig. 2a zeigt den ersten Dichteinsatz 1 in vorgeöffnetem Zustand mit dem seitlich darin einzuführenden ersten Kabel 2, das hier im Querschnitt dargestellt ist und längs zur Durchgangsöffnung 10 und damit längs zum Spalt S verläuft. Im vorgeöffneten Zustand besitzt der Spalt S eine Breite B. Die Breite B beträgt mehr als 5%, insbesondere mehr als 10%, bevorzugt mehr als 15% und insbesondere mehr als 20% des Durchmessers Do des ersten Dichtensatzes 1 im geschlossenen Zustand. Die Breite B des Spalts S ist dabei an der Stelle zu messen, an der die beiden Schlitzflächen 11, 12 im vorgeöffneten Zustand ihren geringsten Abstand besitzen.

Es ist leicht erkennbar, dass der händische Aufwand der seitlichen Einführung des Kabels 2 in den Dichteinsatz 1 nur gering ist. Insbesondere kann dieser Vorgang mit nur einer einzigen Hand ausgeführt werden. Doch auch eine maschinelle Montage kann dadurch vereinfacht werden. Dabei verläuft das hier im Querschnitt gezeigte Kabel 2 bereits in axialer Richtung der Durchgangsöffnung 10 und wird radial dazu durch den Spalt S in die Durchgangsöffnung 10 eingeführt.

Dem Spalt S gegenüberliegend besitzt der Dichteinsatz 1 in seiner Durchgangsöffnung 10 einen Kompressionsabschnitt 101. Es ist leicht erkennbar, dass, obgleich das Kabel 2 einen kreisrunden Querschnitt aufweist, der Verlauf der Durchgangsöffnung 10 im vorgeöffneten Zustand insbesondere durch diesen Kompressionsbereich 101 zunächst von einer kreisrunden Form abweicht.

Durch Einführung des Kabels 2 in den Dichteinsatz 1 und durch das darauffolgende Einführen des Dichteinsatzes 1 in ein Segment 30 des Rahmens 3 wird dieser Kompressionsbereich 101 jedoch stärker als die anderen Abschnitte der Durchgangsöffnung 10 komprimiert, so dass der Dichteinsatz 1 das Kabel 2 zur dessen Abdichtung und zu dessen Zugentlastung form- und kraftschlüssig umschließt.

Aus der Fig, 2b wird zudem das Vorhandensein einer umlaufende Dichtkontur 13 ersichtlich. Diese ist formschlüssig in das jeweilige Segment einfügbar und kann mit ihren Randbereichen 131 den Rahmen 3 am Rand des Segments 30 zur verbesserten Abdichtung übergreifen.

Der Spalt S wird beidseitig durch zwei Schlitzflächen 11, 12, begrenzt, nämlich durch eine erste Schlitzfläche 11 und eine zweite Schlitzfläche 12.

Die beiden Schlitzflächen 11, 12 besitzen eine zueinander komplementäre Kontur, durch die sie zur besseren Abdichtung und zur Verhinderung einer gegenseitigen Verschiebung durch das Schließen des Dichteinsatzes in einander greifen. Im vorliegenden Fall handelt es sich bei dieser Kontur um einen Wellenschnitt. Es sind aber ähnlich wirkende andere Konturen denkbar, z.B. rechteckige, stupfwinklige oder spitz zulaufende und/oder auch dreidimensionale, z.B. kugelsegmentartige oder pyramidenförmige Konturen möglich.

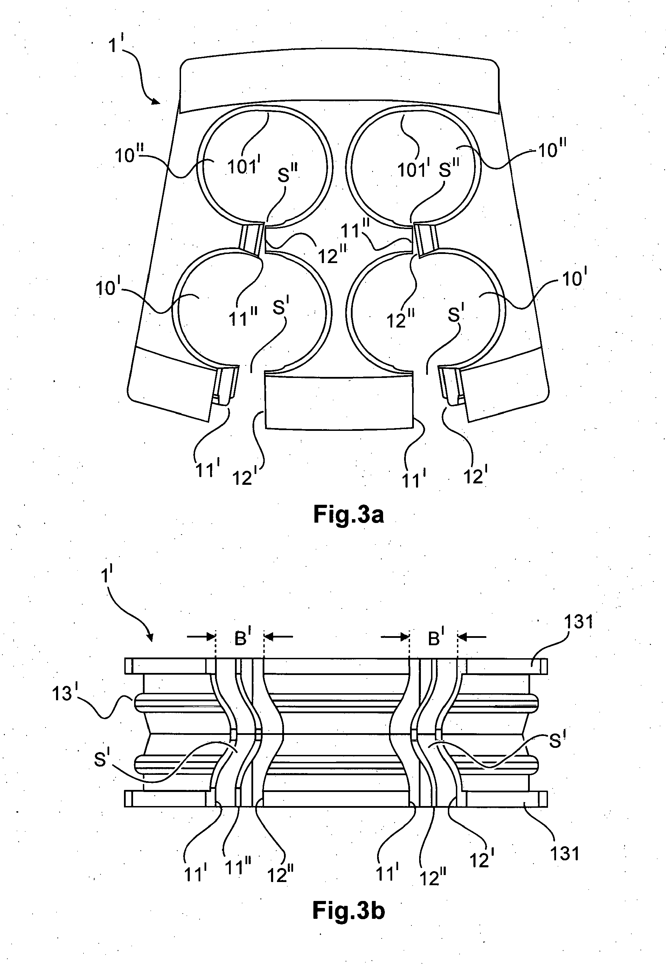

Die Fig. 3a zeigt den zweiten Dichteinsatz 1' in einem vorgeöffneten Zustand. Dabei sind die beiden vorderen Durchgangsöffnungen 10' je durch einen Spalt S' vorgeöffnet. Der Spalt S' ist durch zwei Schlitzflächen 11', 12' begrenzt, die ebenfalls eine zueinander komplementäre Wellenschnittkontur besitzen. Es sind aber auch andere, vergleichbar wirkende Konturen denkbar. Z.B. sind auch rechteckige, stupfwinklige oder spitz zulaufende und/oder auch dreidimensionale, z.B. kugelsegmentartige oder pyramidenförmige Konturen möglich.

Die beiden hinteren Durchgangsöffnungen 10" sind mit den beiden vorderen Durchgangsöffnungen 10' über einen hinteren Spalt S" verbunden. Zum Einführen eines der zweiten Kabel 2' muss dieses zunächst durch den vorderen Spalt S' in die erste Durchgangsöffnung 10' und von dieser durch den zweiten Spalt S" in die hintere Durchgangsöffnung 10" eingeführt werden. Auch beidseitig jedes dieser hinteren Spalte S" besitzt der zweite Dichteinsatz 1' jeweils eine erste und eine zweite Schlitzfläche 11", 12".

Die Fig. 3b zeigt den zweiten Dichteinsatz 1' aus der Kabeleinführrichtung, also mit Blick auf die beiden vorderen Spalte S'. Diese geben den Blick auf die jeweils dahinterliegende erste 11" bzw. zweite Schlitzfläche 12" je eines der hinteren Spalte S" frei.

Die vorderen Spalte S' besitzen im vorgeöffneten Zustand im Bereich des kürzesten Abstands ihrer Spaltflächen 11', 12' eine Breite B'. Diese Breite B' beträgt mehr als 5%, insbesondere mehr als 10%, bevorzugt mehr als 15% und insbesondere mehr als 20% des Durchmessers D₀' der dazugehörigen Durchgangsöffnung 10' des zweiten Dichtensatzes 1' im geschlossenen Zustand. Die Breite B' des vorderen Spalts S' ist somit an der Stelle zu messen, an der die beiden dazugehörigen Schlitzflächen 11', 12' im vorgeöffneten Zustand ihren geringsten Abstand besitzen.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind.

### Bezugszeichenliste

- 1, 1': erster, zweiter Dichteinsatz
- 10,: erste Durchgangsöffnung
- 10', 10": zweite (vordere / hintere) Durchgangsöffnungen;
- 101, 101': erster, zweiter Kompressionsabschnitt
- 11, 11', 11": erste Schlitzflächen
- 12, 12', 12": zweite Schlitzflächen
- 13: Dichtkontur
- 131: Randbereiche der Dichtkontur

- 2, 2': erstes, zweites Kabel

- 3: Rahmen
- 30: Segmente
- 31: erster Steg
- 32: Schenkel
- 33: Trennwände
- 34: zweiter Steg
- 35: Schrauben

- S, S', S": Spalt, vorderer Spalt, hinterer Spalt
- B: Breite des Spaltes
- B': Breite des vorderen Spaltes
- D₀, D₀': Durchmesser der jeweiligen Durchgangsöffnungen

## Patentansprüche

1. Steckverbinder, aufweisend ein Steckverbindergehäuse und mehrere verschiedene Dichteinsätze (1, 1') zur Einführung mehrerer Kabel (2, 2') in das Steckverbindergehäuse, wobei jeder Dichteinsatz (1, 1') aus mindestens einem elastisch verformbaren Material gebildet ist und mindestens eine Durchgangsöffnung (10, 10', 10") zum Hindurchführen des mindestens einen Kabels (2, 2') aufweist, wobei jeder Dichteinsatz (1, 1') längs der Durchgangsöffnung (10) mindestens einen Schlitz besitzt, durch den zwei einander gegenüberliegende Schlitzflächen (11, 11', 11", 12, 12', 12") gebildet sind, so dass der Dichteinsatz (1, 1') zur seitlichen Einführung oder Entnahme des Kabels (2, 2') einen geöffneten sowie zur Abdichtung und Zugentlastung des Kabels (2, 2') einen geschlossenen Zustand einnehmen kann, wobei sich jeder Dichteinsatz (1, 1') ohne Einwirkung äußerer Kräfte in seinem geöffneten ("vorgeöffneten") Zustand befindet, in welchem er an seinem Schlitz einen Spalt (S, S') aufweist, durch den die beiden Schlitzflächen (11, 11', 11", 12, 12', 12") automatisch voneinander getrennt sind, wobei
- der Steckverbinder ein Steckverbindermodularsystem aufweist, welches einen Steckverbindermodularrahmen und mehrere verschiedene Steckverbindermodule besitzt, und wobei
- der Steckverbinder weiterhin eine Kabeldurchführungseinrichtung besitzt, die zumindest einen U-förmigen Rahmen (3) mit zumindest zwei Schenkeln (32) und einem diese beiden Schenkel (32) an jeweils einem Ende verbindenden ersten Steg (31) besitzt, wobei
- die besagten Dichteinsätze (1,1') bereits in dem Rahmen (3) angeordnet oder zumindest in den Rahmen (3) einzuführen HARTING Electric GmbH & Co. KG sind, wobei
- das Steckverbindergehäuse an seiner Kabelanschlussseite eine Öffnung zum Ein- und/oder Anfügen des Rahmens (3) mit den Dichteinsätzen (1, 1') aufweist.

2. Steckverbinder nach Anspruch 1 **dadurch gekennzeichnet, dass** der Spalt (S, S') ohne die Einwirkung äußerer Kräfte (F) eine Breite (B, B') aufweist, die mindestens 5% des Durchmessers (D₀, D₀') beträgt, den die Durchgangsöffnung (10, 10') im geschlossenen Zustand des Dichteinsatzes (1, 1') besitzt.

3. Steckverbinder nach einem der vorstehenden Ansprüche, **dadurch gekennzeichnet, dass** der Spalt (S, S') ohne die Einwirkung äußerer Kräfte (F) eine Breite (B, B') aufweist, die mindestens 10% des Durchmessers (D₀, D₀') beträgt, den die Durchgangsöffnung (10, 10') im geschlossenen Zustand des Dichteinsatzes (1, 1') besitzt.

4. Steckverbinder nach einem der vorstehenden Ansprüche, **dadurch gekennzeichnet, dass** der Spalt (S, S') ohne die Einwirkung äußerer Kräfte (F) eine Breite (B, B') aufweist, die mindestens 20% des Durchmessers (D₀, D₀') beträgt, den die Durchgangsöffnung (10, 10') im geschlossenen Zustand des Dichteinsatzes (1, 1') besitzt.

5. Steckverbinder nach einem der vorstehenden Ansprüche **dadurch gekennzeichnet, dass** die beiden Schlitzflächen (11, 11', 12, 12') eine zueinander komplementäre Kontur aufweisen, durch welche sie beim Schließen jedes Dichteinsatzes (1, 1') zur besonders guten Abdichtung ineinandergreifend zusammenfügbar sind.

6. Steckverbinder nach Anspruch 5, **dadurch gekennzeichnet, dass** es sich bei der komplementären Kontur um eine Wellenschnittkontur handelt.

7. Steckverbinder nach einem der vorstehenden Ansprüche, **dadurch gekennzeichnet, dass** jeder Dichteinsatz (1, 1') in seinem geschlossenen Zustand das durch die jeweilige Durchgangsöffnung (10, 10') geführte Kabel (2, 2') zu dessen Abdichtung und Zugentlastung form- und kraftschlüssig umschließt.

8. Steckverbinder nach einem der vorstehenden Ansprüche, **dadurch gekennzeichnet, dass** jeder Dichteinsatz (1, 1') in zumindest einer Durchgangsöffnung (10, 10', 10") einen Kompressionsabschnitt (101, 101') aufweist, der sich beim Schließen des Dichteinsatzes (1, 1') stärker als die anderen Bereiche der Durchgangsöffnung komprimiert, so dass der Dichteinsatz (1, 1') ein eingeführtes Kabel (2, 2') nach dem Schließen mit dieser Durchgangsöffnung (10, 10', 10") form- und kraftschlüssig umschließt.

9. Steckverbinder nach einem der vorstehenden Ansprüche, **dadurch gekennzeichnet, dass** jeder Dichteinsatz (1, 1') in seiner Durchgangsöffnung (10, 10') weiterhin eine Innenkontur aufweist, durch deren Form und/oder Härte ein gewünschtes Verhältnis zwischen der Abdichtung einerseits und der Haltekraft der besagten Zugentlastung andererseits einstellbar ist.

10. Steckverbinder nach einem der vorstehenden Ansprüche, **dadurch gekennzeichnet, dass** es sich bei dem elastisch verformbaren Material, aus dem jeder Dichteinsatz (1, 1') gebildet ist, um einen weichen Kunststoff ("Elastomer") und/oder um eine Kautschukverbindung ("Gummi") handelt.

11. Steckverbinder nach einem der vorstehenden Ansprüche, **dadurch gekennzeichnet, dass** jeder Dichteinsatz (1, 1') einstückig ausgeführt ist.

12. Steckverbinder gemäß einem der vorstehenden Ansprüche, wobei der Rahmen (3) eine oder mehrere Trennwände (33) aufweist, welche zwischen den Schenkeln (32) angeordnet und mit ihrem ersten Ende an dem ersten Steg (31) befestigt und/oder einstückig damit ausgebildet sind.

13. Steckverbinder gemäß Anspruch 12, wobei durch die eine oder mehrere Trennwände (33) im Rahmen (3) mehrere Segmente (30) zur Aufnahme der Dichteinsätze (1, 1') gebildet sind.

14. Steckverbinder gemäß Anspruch 13, wobei der jeweilige Dichteinsatz (1, 1') durch seine Einführung in das jeweilige Segment (30) von seinem geöffneten in seinen geschlossenen Zustand überführbar ist.

15. Steckverbinder gemäß einem der Ansprüche 12 bis 14, wobei der oder die im Rahmen angeordneten Dichteinsätze (1, 1') durch das Anbringen eines zweiten Stegs (34) zur Zugentlastung und Abdichtung des Kabels (2, 2') endgültig komprimierbar sind.

16. Steckverbinder gemäß Anspruch 15, wobei der zweite Steg (34) als separates Bauteil Bestandteil des Rahmens (3) ist.

17. Steckverbinder gemäß Anspruch 15, wobei der zweite Steg Bestandteil des Steckverbindergehäuses ist.

18. Steckverbinder gemäß Anspruch 16, wobei der Rahmen (3) mehrere Schrauböffnungen sowie eine Dichtungsnut mit einem eingelegten Dichtungsring aufweist, um ein Anschrauben des Rahmens (3) an das Steckverbindergehäuse mit einer hohen Dichtigkeit zu gewährleisten.

19. Steckverbinder gemäß Anspruch 18, wobei das Steckverbindergehäuse dazu geeignet ist, das Steckverbindermodularsystem aufzunehmen.

20. Steckverbinder gemäß Anspruch 19, wobei es sich bei dem Steckverbindergehäuse um ein Tüllengehäuse handelt, welches die kabelanschlussseitige Öffnung zum Anfügen der Kabeldurchführungseinrichtung aufweist, wobei das Tüllengehäuse weiterhin mehrere Schraubdurchführungsöffnungen besitzt, die dazu dienen, Schrauben hindurch zu führen, um den Rahmen (3) an seinen Schrauböffnungen am Tüllengehäuse zu verschrauben.

21. Verfahren zur Einführung eines oder mehrerer Kabel durch die Kabeldurchführungseinrichtung in das Steckverbindergehäuse des Steckverbinders nach einem der vorstehenden Ansprüche, umfassend folgende Schritte:
A. Einführen eines oder mehrerer Kabel (2, 2') in einen oder mehrere automatisch vorgeöffnete Dichtensätze (1, 1 ');
B. Einfügen des/der Dichteinsätze (1, 1') in ein oder mehrere Segmente eines Rahmens (3); dadurch
C. automatisches Schließen der Dichteinsätze (1, 1') und Halten des/der Kabel(s) im jeweiligen Dichteinsatz (1, 1');
D. korrigieren der Position des oder der Kabel (2, 2') im jeweiligen Dichteinsatz;
E. endgültiges Komprimieren der Dichteinsätze (1, 1') zur Zugentlastung und zur endgültigen Fixierung der Kabel (2, 2') in der gewünschten Position durch Anbringen des zweiten Stegs (34).

22. Verfahren gemäß Anspruch 21, wobei das Verfahren vor dem Schritt D. zusätzlich noch den folgenden Schritt beinhaltet:
Befestigen des Rahmens (3) an dem Kabelanschlussbereich des Steckverb indergehäuses.

## Claims

1. Plug-in connector, having a plug-in connector housing and a plurality of different sealing inserts (1, 1') for inserting a plurality of cables (2, 2') into the plug-in connector housing, wherein each sealing insert (1, 1') is formed from at least one elastically deformable material and has at least one passage opening (10, 10', 10") for guiding the at least one cable (2, 2') through, wherein each sealing insert (1, 1') has at least one slot along the passage opening (10), two mutually opposite slot faces (11, 11', 11'', 12, 12', 12") being formed by the said slot, so that the sealing insert (1, 1') can assume an opened state for laterally inserting or removing the cable (2, 2') and also a closed state for sealing off and relieving strain from the cable (2, 2'), wherein each sealing insert (1, 1'), without the influence of external forces, is in its opened ("pre-opened") state in which it has, at its slot, a gap (S, S') by which the two slot faces (11, 11', 11'', 12, 12', 12'') are automatically separated from one another, wherein
- the plug-in connector has a plug-in connector modular system which has a plug-in connector modular frame and a plurality of different plug-in connector modules, and wherein
- the plug-in connector furthermore has a cable lead-through device which has at least one U-shaped frame (3) with at least two limbs (32) and a first web (31) that connects these two limbs (32) at one end in each case, wherein
- the said sealing inserts (1, 1') are already arranged in the frame (3) or are at least to be inserted into the frame (3), wherein
- the plug-in connector housing, on its cable connection side, has an opening for integrating the frame (3) with and/or attaching it to the sealing inserts (1, 1').

2. Plug-in connector according to Claim 1, **characterized in that** the gap (S, S'), without the influence of external forces (F), has a width (B, B') which is at least 5% of the diameter (D₀, D₀") of the passage opening (10, 10') in the closed state of the sealing insert (1, 1').

3. Plug-in' connector according to either of the preceding claims, **characterized in that** the gap (S, S'), without the influence of external forces (F), has a width (B, B') which has at least 10% of the diameter (D₀, D₀') of the passage opening (10, 10') in the closed state of the sealing insert (1, 1').

4. Plug-in connector according to one of the preceding claims, **characterized in that** the gap (S, S'), without the influence of external forces (F), has a width (B, B') which is at least 20% of the diameter (D₀, D₀') of the passage opening (10, 10') in the closed state of the sealing insert (1, 1').

5. Plug-in connector according to one of the preceding claims, **characterized in that** the two slot faces (11, 11', 12, 12') have a mutually complementary contour by way of which they can be joined together in an interengaging manner for particularly good sealing off when each sealing insert (1, 1') is closed.

6. Plug-in connector according to Claim 5, **characterized in that** the complementary contour is a scalloped contour.

7. Plug-in connector according to one of the preceding claims, **characterized in that** each sealing insert (1, 1'), in its closed state, surrounds the cable (2, 2') that is guided through the respective passage opening (10, 10') in a form- and force-fitting manner in order to seal off and relieve strain from the said cable.

8. Plug-in connector according to one of the preceding claims, **characterized in that** each sealing insert (1, 1'), in at least one passage opening (10, 10', 10"), has a compression portion (101, 101') which, when the sealing insert (1, 1') is closed, is compressed more strongly than the other regions of the passage opening, so that the sealing insert (1, 1'), after closing, surrounds an inserted cable (2, 2') in a form- and force-fitting manner by way of this passage opening (10, 10', 10'').

9. Plug-in connector according to one of the preceding claims, **characterized in that** each sealing insert (1, 1'), in its passage opening (10, 10'), furthermore has an inner contour, the shape and/or hardness, of which can be used to set a desired ratio between the sealing off on the one hand and the holding force of the said strain relief on the other.

10. Plug-in connector according to one of the preceding claims, **characterized in that** the elastically deformable material from which each sealing insert (1, 1') is formed is a soft plastics material ("elastomer") and/or a caoutchouc compound ("rubber").

11. Plug-in connector according to one of the preceding claims, **characterized in that** each sealing insert (1, 1') is constructed in one piece.

12. Plug-in connector according to one of the preceding claims, wherein the frame (3) has one or more separating walls (33) which are arranged between the limbs (32) and by way of their first end are fastened to the first web (31) and/or are formed in one piece with the said first web.

13. Plug-in connector according to Claim 12, wherein a plurality of segments (30) for receiving the sealing inserts (1, 1') are formed by the one or more separating walls (33) in the frame (3).

14. Plug-in connector according to Claim 13, wherein the respective sealing insert (1, 1') can be moved from its opened state to its closed state as a result of being inserted into the respective segment (30).

15. Plug-in connector according to one of Claims 12 to 14, wherein the sealing insert or inserts (1, 1') that are arranged in the frame can be ultimately compressed by fitting a second web (34) for relieving strain from and sealing off the cable (2, 2').

16. Plug-in connector according to Claim 15, wherein the second web (34), as a separate component, is a constituent part of the frame (3).

17. Plug-in connector according to Claim 15, wherein the second web is a constituent part of the plug-in connector housing.

18. Plug-in connector according to Claim 16, wherein the frame (3) has a plurality of screw openings and also a sealing groove with an inlaid sealing ring in order to ensure the frame (3) is screwed, onto the plug-in connector housing with a high level of leaktightness.

19. Plug-in connector according to Claim 18, wherein the plug-in connector housing is suitable for receiving the plug-in connector modular system.

20. Plug-in connector according to Claim 19, wherein the plug-in connector housing is a sleeve housing which has a cable-connection-side opening for attaching the cable lead-through device, wherein the sleeve housing furthermore has a plurality of screw lead-through openings which serve for guiding through screws in order to screw the frame (3), at its screw openings, to the sleeve housing.

21. Method for inserting one or more cables through the cable lead-through device into the plug-in connector housing of the plug-in connector according to one of the preceding claims, comprising the following steps:
A. inserting one or more cables (2, 2') into one or more automatically pre-opened sealing inserts (1, 1') ;
B. integrating the sealing insert/inserts (1, 1') into one or more segments of a frame (3); thereby
C. automatically closing the sealing inserts (1, 1') and holding the cable/cables in the respective sealing insert (1, 1');
D. correcting the position of the cable or cables (2, 2') in the respective sealing insert;
E. ultimately compressing the sealing inserts (1, 1') for relieving strain from and for ultimately fixing the cables (2, 2') in the desired position by fitting the second web (34).

22. Method according to Claim 21, wherein the method prior to step D. additionally contains the following step:
fastening the frame (3) to the cable connection region of the plug-in connector housing.

## Revendications

1. Connecteur, présentant un boîtier de connecteur et plusieurs inserts d'étanchéité (1, 1') servant à introduire plusieurs câbles (2, 2') dans le boîtier de connecteur, chaque insert d'étanchéité (1, 1') étant formé à partir d'au moins un matériau élastiquement déformable et présentant au moins une ouverture de passage (10, 10', 10") pour faire passer ledit au moins un câble (2, 2'), chaque insert d'étanchéité (1, 1') comprenant le long de l'ouverture de passage (10) au moins une fente formant deux surfaces de fente (11, 11', 11", 12, 12', 12") opposées l'une à l'autre de sorte que l'insert d'étanchéité (1, 1') peut adopter un état ouvert pour l'introduction ou l'extraction latérale du câble (2, 2') ainsi qu'un état fermé pour assurer l'étanchéité et la décharge de traction du câble (2, 2'), dans lequel chaque insert d'étanchéité (1, 1') qui n'est pas sous l'effet de forces extérieures se trouve dans son état ouvert (« préouvert ») dans lequel il présente au niveau de sa fente un interstice (S, S') par lequel les deux surfaces de fente (11, 11', 11", 12, 12', 12") sont automatiquement séparées l'une de l'autre,
- le connecteur présentant un système modulaire de connecteur qui comprend un cadre modulaire de connecteur et plusieurs modules de connecteurs différents, et
- le connecteur comprenant en outre un équipement de passage de câble qui comprend au moins un cadre en forme de U (3) doté d'au moins deux branches (32) et d'une première entretoise (31) reliant ces deux branches (32) à une extrémité respectivement, dans lequel
- lesdits inserts d'étanchéité (1,1') sont déjà disposés dans le cadre (3) ou sont au moins à introduire dans le cadre (3), dans lequel
- le boîtier de connecteur présente sur son côté de connexion de câble une ouverture pour l'insertion et/ou l'ajout du cadre (3) doté des inserts d'étanchéité (1, 1').

2. Connecteur selon la revendication 1, **caractérisé en ce que** l'interstice (S, S') qui n'est pas sous l'effet de forces extérieures (F) présente une largeur (B, B') qui est au moins égale à 5 % du diamètre (Do, D₀') que comprend l'ouverture de passage (10, 10') à l'état fermé de l'insert d'étanchéité (1, 1').

3. Connecteur selon l'une quelconque des revendications précédentes, **caractérisé en ce que** l'interstice (S, S') qui n'est pas sous l'effet de forces extérieures (F) présente une largeur (B, B') qui est au moins égale à 10 % du diamètre (D₀, D₀') que comprend l'ouverture de passage (10, 10') à l'état fermé de l'insert d'étanchéité (1, 1').

4. Connecteur selon l'une quelconque des revendications précédentes, **caractérisé en ce que** l'interstice (S, S') qui n'est pas sous l'effet de forces extérieures (F) présente une largeur (B, B') qui est égale à au moins 20 % du diamètre (Do, Do') que comprend l'ouverture de passage (10, 10') à l'état fermé de l'insert d'étanchéité (1, 1').

5. Connecteur selon l'une quelconque des revendications précédentes, **caractérisé en ce que** les deux surfaces de fente (11, 11', 12, 12') présentent un contour mutuellement complémentaire qui permet à la fermeture de chaque insert d'étanchéité (1, 1') de les assembler par engagement mutuel pour une étanchéité particulièrement bonne.

6. Connecteur selon la revendication 5, **caractérisé en ce que** le contour complémentaire est un contour à coupe ondulée.

7. Connecteur selon l'une quelconque des revendications précédentes, **caractérisé en ce que** chaque insert d'étanchéité (1, 1') dans son état fermé entoure par complémentarité de forme et par adhérence le câble (2, 2') posé à travers l'ouverture de passage (10, 10') respective pour assurer l'étanchéité et la décharge de traction de celui-ci.

8. Connecteur selon l'une quelconque des revendications précédentes, **caractérisé en ce que** chaque insert d'étanchéité (1, 1') présente dans au moins une ouverture de passage (10, 10', 10") une partie de compression (101, 101') qui est comprimée plus fortement à la fermeture de l'insert d'étanchéité (1, 1') que les autres zones de l'ouverture de passage de sorte qu'après la fermeture, l'insert d'étanchéité (1, 1') entoure par complémentarité de forme et par adhérence un câble introduit (2, 2') avec cette ouverture de passage (10, 10', 10").

9. Connecteur selon l'une quelconque des revendications précédentes, **caractérisé en ce que** chaque insert d'étanchéité (1, 1') présente dans son ouverture de passage (10, 10') en outre un contour intérieur dont la forme et/ou la dureté permet de régler un rapport souhaité entre l'étanchéité d'une part et la force de maintien de ladite décharge de traction d'autre part.

10. Connecteur selon l'une quelconque des revendications précédentes, **caractérisé en ce que** le matériau élastiquement déformable dont est formé chaque insert d'étanchéité (1, 1') est une matière plastique souple (« élastomère ») et/ou un composé de caoutchouc (« gomme »).

11. Connecteur selon l'une quelconque des revendications précédentes, **caractérisé en ce que** chaque insert d'étanchéité (1, 1') est réalisé d'un seul tenant.

12. Connecteur selon l'une quelconque des revendications précédentes, dans lequel le cadre (3) présente une ou plusieurs cloisons (33) qui sont disposées entre les branches (32) et sont fixées par leur première extrémité à la première entretoise (31) et/ou sont réalisées d'un seul tenant avec celle-ci.

13. Connecteur selon la revendication 12, dans lequel ladite une ou les plusieurs cloisons (33) forment plusieurs segments (30) dans le cadre (3) pour recevoir les inserts d'étanchéité (1, 1').

14. Connecteur selon la revendication 13, dans lequel l'insert d'étanchéité (1, 1') respectif peut être transféré de son état ouvert à son état fermé par son introduction dans le segment (30) respectif.

15. Connecteur selon l'une quelconque des revendications 12 à 14, dans lequel le(s) insert(s) d'étanchéité (1, 1') disposé(s) dans le cadré peut/peuvent être comprimé(s) définitivement par la mise en place d'une deuxième entretoise (34) pour assurer la décharge de traction et l'étanchéité du câble (2, 2').

16. Connecteur selon la revendication 15, dans lequel la deuxième entretoise (34) fait partie du cadre (3) sous forme de pièce séparée.

17. Connecteur selon la revendication 15, dans lequel la deuxième entretoise fait partie du boîtier de connecteur.

18. Connecteur selon la revendication 16, dans lequel le cadre (3) présente plusieurs ouvertures à vis ainsi qu'une rainure d'étanchéité dotée d'une bague d'étanchéité insérée afin d'assurer un vissage du cadre (3) sur le boîtier de connecteur avec une étanchéité élevée.

19. Connecteur selon la revendication 18, dans lequel le boîtier de connecteur est. adapté pour recevoir le système modulaire de connecteur.

20. Connecteur selon la revendication 19, dans lequel le boîtier de connecteur est un boîtier douille qui présente l'ouverture côté connexion de câble pour ajouter l'équipement de passage de câble, le boîtier douille comprenant en outre plusieurs ouvertures de passage de vis qui servent à faire passer des vis afin de visser le cadre (3) sur le boîtier douille au niveau de ses ouvertures à vis.

21. Procédé permettant d'introduire un ou plusieurs câbles à travers l'équipement de passage de câble dans le boîtier de connecteur du connecteur selon l'une quelconque des revendications précédentes, comprenant les étapes suivantes consistant à :
A. introduire un ou plusieurs câbles (2, 2') dans un ou plusieurs inserts d'étanchéité (1, 1') automatiquement préouverts ;
B. insérer le(s) insert(s) d'étanchéité (1, 1') dans un ou plusieurs segments d'un cadre (3); de ce fait
C. fermer automatiquement les inserts d'étanchéité (1, 1') et maintenir le(s) câble(s) dans l'insert d'étanchéité (1, 1') respectif ;
D. corriger la position du ou des câbles (2, 2') dans l'insert d'étanchéité respectif ;
E. comprimer définitivement les inserts d'étanchéité (1, 1') pour la décharge de traction et pour la fixation définitive des câbles (2, 2') dans la position souhaitée par la mise en place de la deuxième entretoise (34).

22. Procédé selon la revendication 21, le procédé comprenant avant l'étape D en plus l'étape suivante consistant à :
fixer le cadre (3) à la zone de connexion de câble du boîtier de connecteur.
